# EUROPÄISCHE PATENTANMELDUNG

(11) **EP 0 704 362 A1**
(43) Veröffentlichungstag der Anmeldung: **03.04.1996**
(21) Anmeldenummer: 95115058.0
(22) Anmeldetag: 25.09.1995
(51) Int. Cl.: B61D 17/20, B61D 17/06, B61D 17/02

(54) **Triebwagen zur wahlweisen Verwendung als Kopfwagen und als Durchgangswagen**

(30) Priorität: 28.09.1994 DE 4434565
(71) Anmelder: ABB PATENT GmbH, D-68309 Mannheim (DE)
(72) Erfinder: Kaiser, Wilfried, Dr., D-87657 Görisried (DE); Zengerle, Manfred, D-67280 Ebertsheim (DE)
(74) Vertreter: Rupprecht, Klaus, Dipl.-Ing.

(57) **Zusammenfassung**

Es wird ein Triebwagen zur wahlweisen Verwendung als Kopfwagen und als angekoppelter Durchgangswagen vorgeschlagen, mit einer Stirnwand, einem Führerstand (3) hinter der Stirnwand, einer zu öffnenden Vordertür in der Stirnwand und mit randseitigen Abschirm- und Dichtungsmitteln (20), die so angeordnet sind, daß sie zusammen mit gleichen Abschirm- und Dichtungsmitteln eines anderen Wagens einen abgeschirmten Durchgang zwischen den Wagen (1,2) bilden, wobei sich der Führerstand in einer Betriebsposition hinter der zumindest teilweise durchsichtigen Vordertür und in einer Ruheposition seitlich außerhalb des Durchganges bei geöffneter Vordertür befindet. Die Stirnwand ist bei Verwendung des Triebwagens (1) als Kopfwagen mit einer aerodynamisch geformten Stirnverkleidung (4) abgedeckt, die bei Verwendung des Triebwagens (1) als Durchgangswagen auf das Wagendach klappbar und dort verankerbar ist.

Bei einer zweiten Variante der Erfindung ist die Stirnwand aerodynamisch ausgebildet und bei Verwendung des Triebwagens (6,7,12,13) als Durchgangswagen von einer Stirnverkleidung (8,14), bestehend aus einem Dachsegment (15) und zwei Seitenwandsegmenten (16) abgedeckt, wobei diese Stirnverkleidung bei Verwendung des Triebwagens als Kopfwagen in einem Zwischendachraum (10,17) und Seitenwandräumen (9,18) eingefahren ist.

## Beschreibung

Die Erfindung bezieht sich auf einen Triebwagen zur wahlweisen Verwendung als Kopfwagen und als angekoppelter Durchgangswagen, mit einer Stirnwand, einem Führerstand hinter der Stirnwand, einer zu öffnenden Vordertür in der Stirnwand und mit randseitigen Abschirm- und Dichtungsmitteln, die so angeordnet sind, daß sie zusammen mit gleichen Abschirm- und Dichtungsmitteln eines anderen Wagens einen abgeschirmten Durchgang zwischen den Wagen bilden, wobei sich der Führerstand in einer Betriebsposition hinter der zumindest teilweise durchsichtigen Vordertür und in einer Ruheposition seitlich außerhalb des Durchganges bei geöffneter Vordertür befindet.

Ein solcher Triebwagen zur wahlweisen Verwendung als Kopfwagen und als Durchgangswagen ist aus der DE 85 02 804 U1 bekannt und ermöglicht ein flexibles und wirtschaftliches Konzept für den Personenverkehr auf der Schiene, bei dem mehrere eigenständige Triebwagen in wenigen Augenblicken zu einem durchgehend begehbaren Zug zusammengekuppelt werden können. Jeder Triebwagen ist mit einem eigenen Führerstand ausgerüstet, so daß die einzelnen Triebwagen nach Auftrennung des Zuges selbsttätig zu unterschiedlichen Zielorten gefahren werden können. Dabei weisen die Abschirm- und Dichtungsmittel zwar eine aerodynamisch optimierte äußere Formgebung auf, insgesamt ist jedoch die Aerodynamik des als Kopfwagen verwendeten Triebwagens verbesserungsbedürftig.

Der Erfindung liegt die Aufgabe zugrunde, einen aerodynamisch optimierten Triebwagen zur wahlweisen Verwendung als Kopfwagen und als Durchgangswagen anzugeben.

Diese Aufgabe wird gemäß einer ersten Alternative in Verbindung mit den Merkmalen des Oberbegriffes erfindungsgemäß dadurch gelöst, daß die Stirnwand bei Verwendung des Triebwagens als Kopfwagen mit einer aerodynamisch geformten Stirnverkleidung abgedeckt ist, die bei Verwendung des Triebwagens als Durchgangswagen auf das Wagendach klappbar und dort verankerbar ist.

Die Aufgabe wird gemäß einer zweiten Alternative in Verbindung mit den Merkmalen des Oberbegriffes erfindungsgemäß dadurch gelöst, daß die Stirnwand aerodynamisch ausgebildet und bei Verwendung des Triebwagens als Durchgangswagen von einer Stirnverkleidung, bestehend aus einem Dachsegment und zwei Seitenwandsegmenten abgedeckt ist, wobei diese Stirnverkleidung bei Verwendung des Triebwagens als Kopfwagen in einem Zwischendachraum und Seitenwandräumen eingefahren ist.

Wenn dabei von der Verwendung des Triebwagens als Kopfwagen die Rede ist, so gelten die hierfür getroffenen Maßnahmen in gleicher Weise für die Verwendung des Triebwagens als eigenständiges Schienenfahrzeug ohne angekuppelte Durchgangswagen.

Die mit der Erfindung erzielbaren Vorteile bestehen insbesondere darin, daß der Triebwagen bei beiden Alternativen sowohl als Kopfwagen als auch als Durchgangswagen optimal verwendbar ist. Dabei geht die erste Alternative mit der auf dem Wagendach verankerbaren Stirnverkleidung von einem im Grundzustand kastenförmigen Wagenkörper mit senkrechter Stirnwand aus, wie er als ankoppelbarer Durchgangswagen optimal geeignet ist. Die zur Eignung als Kopfwagen erforderliche optimale Aeorodynamik erhält dieser Wagenkasten durch Abdeckung der Stirnwand mit der aerodynamisch geformten Stirnverkleidung, die zu diesem Zweck vom Wagendach geklappt wird. Im Unterschied hierzu geht die zweite Alternative von einem bereits im Grundzustand aerodynamisch optimierten Wagenkasten aus, wie er als Kopfwagen ideal geeignet ist. Der zur Eignung als Durchgangswagen notwendige Durchlaßbereich zwischen zwei miteinander gekoppelten Triebwagen wird durch Ausfahren einer Stirnverkleidung - bestehend aus einem Dachsegment und zwei Seitenwandsegmenten - gebildet. Diese Stirnverkleidung befindet sich bei Verwendung des Triebwagens als Kopfwagen in einem Zwischendachraum und in Seitenwandräumen des Fahrzeuges.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1, 2, 3: einen Triebwagen mit Stirnverkleidung gemäß einer ersten Alternative bei Verwendung als Durchgangswagen und als Kopfwagen,
- Fig. 4, 5: Triebwagen mit Stirnverkleidungen gemäß einer zweiten Alternative bei Verwendung als Durchgangswagen und als Kopfwagen.

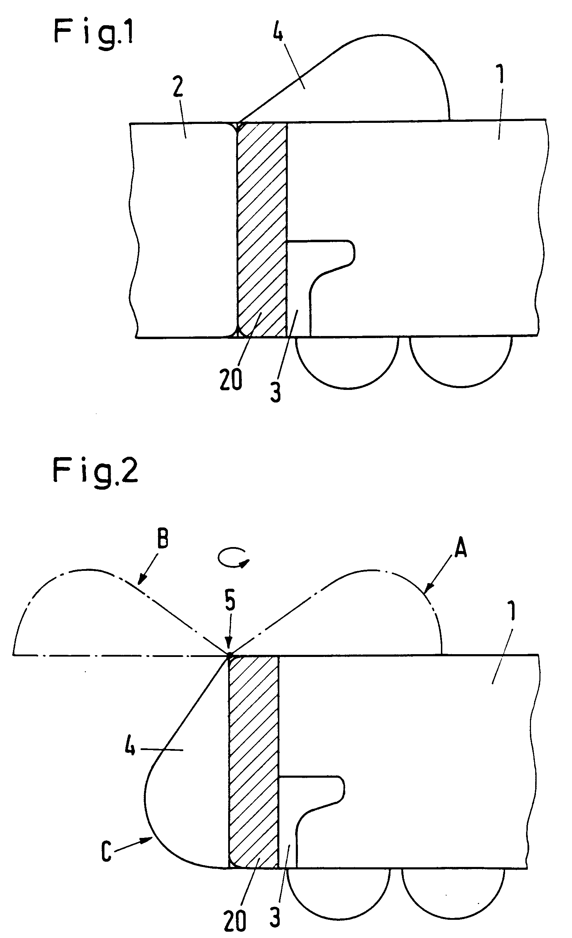

In Fig. 1 sind zwei Triebwagen 1, 2 zu erkennen, die zu einem durchgängig begehbaren Triebzug zusammengekoppelt sind. Damit jeder Triebwagen 1, 2 betriebstechnisch eigenständig und separat antreibbar ist und darüberhinaus auch als Kopfwagen eines Triebzuges eingesetzt werden kann, ist mindestens ein Führerstand 3 pro Triebwagen direkt hinter der Stirnwand vorgesehen. Um einen freien Personendurchgang zwischen den einzelnen Triebwagen zu ermöglichen, sind zumindest im Fensterbereich durchsichtige Vordertüren in der Stirnwand vorgesehen und die innerhalb des Triebzuges nicht zu besetzenden Führerstände um 90° aus ihrer Betriebsposition geschwenkt und in ihre Ruheposition in seitlichen Wandschränken versenkt. Randseitig an den Stirnwänden umlaufende Abschirm- und Dichtungsmittel 20 gewährleisten einen regen- und zugluftdichten Durchlaß zwischen den Wagen. Auf dem Dach des Triebwagens 1 ist eine Stirnverkleidung 4 verankert. Nach Herunterklappen gewährleistet diese Stirnverkleidung 4 die aerodynamisch vorteilhafte Ausbildung des Stirnbereiches des Triebwagens bei dessen eigenständigem Betrieb bzw. bei dessen Verwendung als Kopfwagen eines Triebzuges.

In Fig. 2 ist der Stirnbereich eines Triebwagens dargestellt, wie er bei Verwendung als Kopfwagen eines Triebzuges und bei eigenständigem Betrieb ausgebildet ist. Es ist zu erkennen, daß die Stirnverkleidung 4 eine aerodynamische Formgebung im Stirnbereich des Fahrzeugkastens bewirkt. Um dem Fahrzeugführer eine optimale Sicht auf die Fahrstrecke zu ermöglichen, ist zumindest der unmittelbare Fensterbereich der Stirnverkleidung transparent ausgebildet. Alternativ hierzu kann auch die gesamte Stirnverkleidung 4 aus einem transparenten Material bestehen.

In Fig. 2 ist darüberhinaus auch skizziert, wie die Stirnverkleidung 4 von der Dachposition A (siehe auch Fig. 1) in die Stirnposition C gelangt. In einem ersten Schritt wird die Stirnverkleidung 4 - nach Lösen von Befestigungselementen zwischen Stirnverkleidung 4 und Wagendach - um eine vertikale Achse von der Position A in die Position B geschwenkt (180°-Drehung). Der Drehpunkt ist mit Ziffer 5 bezeichnet. In einem zweiten Schritt erfolgt das Herunterklappen der Stirnverkleidung 4 um eine horizontale Achse quer zur Fahrtrichtung des Triebwagens von der Position B in die Position C (90°-Drehung). Der Punkt 5 bezeichnet auch diese Achse. Anschließend erfolgt eine Befestigung der Stirnverkleidung 4 an der Stirnwand des Triebwagens.

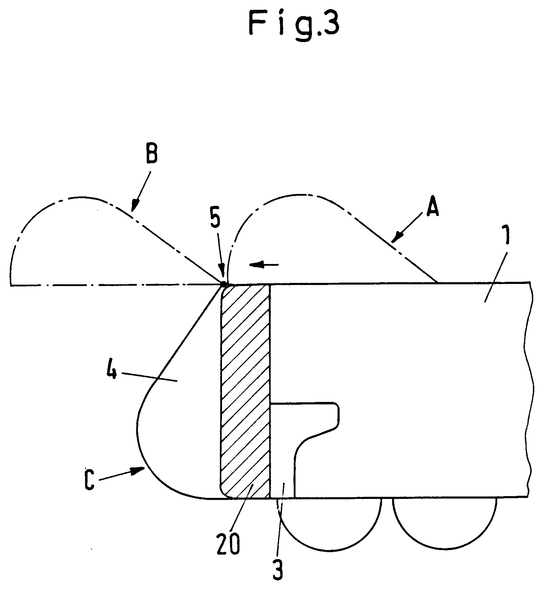

In Fig. 3 ist eine alternative Möglichkeit aufgezeigt, wie die Stirnverkleidung 4 von der Dachposition A in die Stirnposition C gelangt. Hierbei wird die Stirnverkleidung 4 nach Lösen von Befestigungselementen zwischen Stirnverkleidung 4 und Wagendach zunächst horizontal in die Position B verschoben. Anschließend wird die Stirnverkleidung 4 über den Drehpunkt 5 zur Stirnwand des Triebwagens heruntergeklappt. Danach erfolgt die Befestigung der Stirnverkleidung 4 an der Stirnwand des Triebwagens.

Vorzugsweise erfolgt bei beiden Anordnungen gemäß Fig. 2 und 3 eine Fixierung der vor der Stirnwand befindlichen Stirnverkleidung 4 mittels der randseitigen Abschirm- und Dichtungsmittel 20.

Es ist selbstverständlich, daß ein Zusammenkuppeln mehrerer Triebwagen zu einem Triebzug stets erst dann erfolgen kann, wenn sich die Stirnverkleidungen der als Durchgangswagen zu betreibenden Fahrzeuge in der Dachposition befinden.

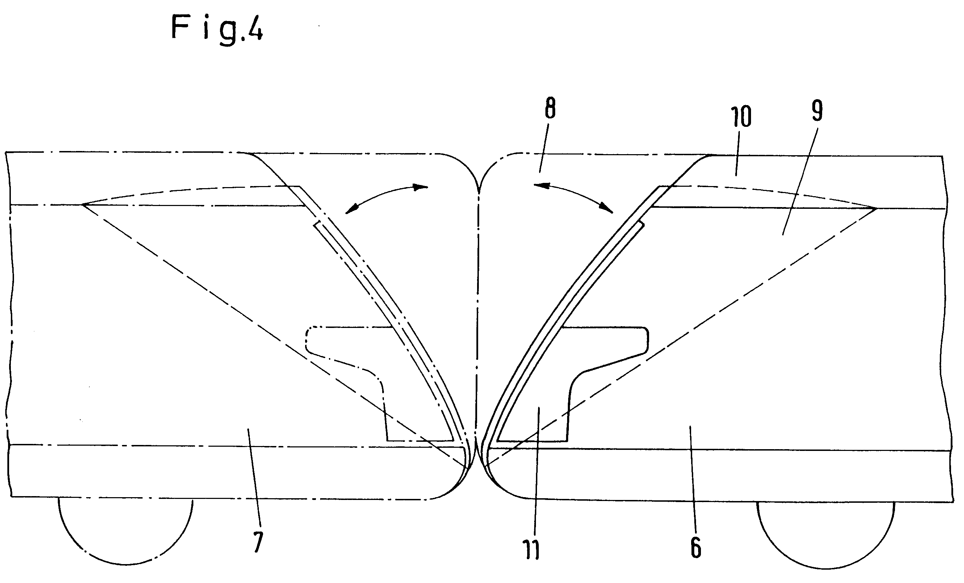

In Fig. 4 sind Triebwagen mit Stirnverkleidungen gemäß einer zweiten Alternative dargestellt. Bei dieser Alternative ist die Stirnwand eines Triebwagens bereits im Grundzustand in allgemein bekannter Form aerodynamisch ausgebildet. Es sind zwei Triebwagen 6, 7 zu erkennen. Beim Kuppeln dieser Triebwagen zu einem Triebzug werden in Zwischendachräumen 10 und Seitenwandräumen 9 versenkte Stirnverkleidungen 8 hydraulisch oder elektrisch ausgefahren. Die Stirnverkleidung 8 besteht aus einem Dachsegment und zwei starr hieran befestigten bzw. angeformten Seitenwandsegmenten. Nach seitlichem Wegschwenken der Führerstände 11 von der Betriebs- in die Ruheposition und Öffnen der zumindest im Fensterbereich durchsichtigen Vordertüren in den Stirnwänden ergibt sich ein regen- und zugluftdichter Personenübergang von einem Wagen zum anderen. Die Regen- und Zugluftdichtigkeit wird durch randseitig umlaufende Abschirm- und Dichtungsmittel insbesondere im Kantenbereich der Stirnverkleidung 8 sichergestellt.

Sollen die Triebwagen eigenständig betrieben werden, ist es einfach und schnell möglich, die Stirnverkleidungen 8 in den Seitenwandräumen 9 und Zwischendachräumen 10 zu versenken, wodurch die aerodynamische Grundform der Fahrzeugkörper wieder hergestellt wird.

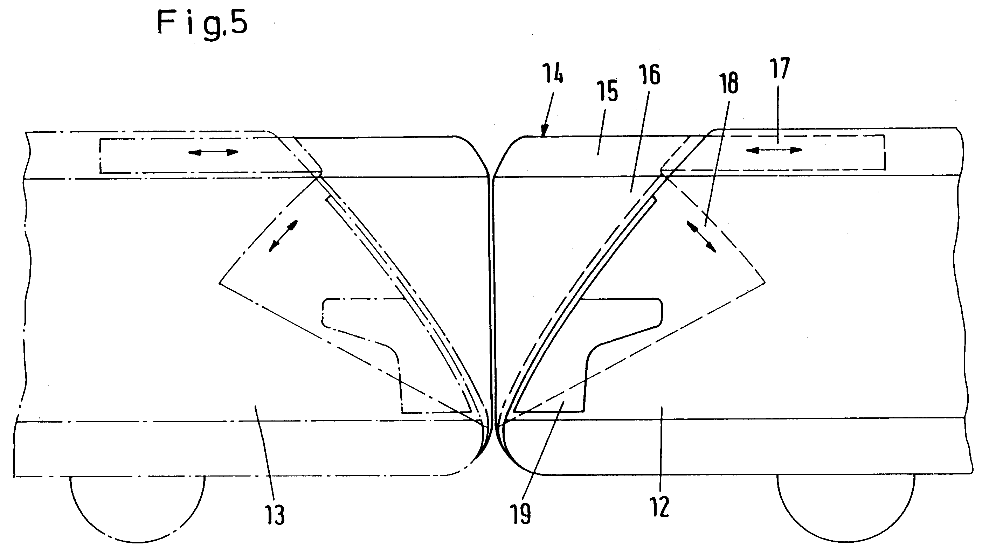

In Fig. 5 sind zwei Triebwagen 12, 13 mit Stirnverkleidungen gemäß der zweiten Variante dargestellt, bei denen die Stirnverkleidungen 14 jedoch im Unterschied zur Ausführungsform gemäß Fig. 4 nicht aus jeweils zwei starr mit einem Dachsegment verbundenen Seitenwandsegmenten besteht, sondern bei denen die Verbindung zwischen Dachsegment 15 und Seitenwandsegmenten 16 auftrennbar ist. Das Dachsegment 15 kann hierdurch horizontal in den Zwischendachraum 17 einfahren bzw. bei Verwendung des Triebwagens als Durchgangswagen aus diesem ausfahren. Hierdurch benötigt der Zwischendachraum 17 vorteilhaft nur eine relativ geringe Innenhöhe. Die zur Versenkung der Seitenwandsegmente 16 erforderlichen Seitenwandräume sind mit Ziffer 18 bezeichnet. Die Verbindungen zwischen Dachsegment 15 und Seitenwandsegmenten 16 können in eingefahrener Position vollständig gelöst oder auf Gelenkverbindungen im Stirnbereich reduziert sein. Der seitlich wegklappbare Führerstand ist mit Ziffer 19 bezeichnet. Die übrige Ausbildung und Funktionsweise ist wie unter Fig. 4 beschrieben.

## Patentansprüche

1. Triebwagen zur wahlweisen Verwendung als Kopfwagen und als angekoppelter Durchgangswagen, mit einer Stirnwand, einem Führerstand (3) hinter der Stirnwand, einer zu öffnenden Vordertür in der Stirnwand und mit randseitigen Abschirm- und Dichtungsmitteln (20), die so angeordnet sind, daß sie zusammen mit gleichen Abschirm- und Dichtungsmitteln eines anderen Wagens einen abgeschirmten Durchgang zwischen den Wagen (1,2) bilden, wobei sich der Führerstand in einer Betriebsposition hinter der zumindest teilweise durchsichtigen Vordertür und in einer Ruheposition seitlich außerhalb des Durchganges bei geöffneter Vordertür befindet, dadurch gekennzeichnet, daß die Stirnwand bei Verwendung des Triebwagens (1) als Kopfwagen mit einer aerodynamisch geformten Stirnverkleidung (4) abgedeckt ist, die bei Verwendung des Triebwagens (1) als Durchgangswagen auf das Wagendach klappbar und dort verankerbar ist.

2. Triebwagen nach Anspruch 1, dadurch gekennzeichnet, daß an der Oberkante der Stirnwand ein Drehpunkt (5) angeordnet ist, der ein Hochschwenken der Stirnverkleidung (4) um eine horizontale Achse quer zur Fahrtrichtung des Triebwagens (1) und ein Drehen der hochgeschwenkten Stirnverkleidung (4) um eine vertikale Achse in eine Endposition auf dem Wagendach ermöglicht.

3. Triebwagen nach Anspruch 1, dadurch gekennzeichnet, daß an der Oberkante der Stirnwand ein Drehpunkt (5) angeordnet ist, der ein Hochschwenken der Stirnverkleidung (4) um eine horizontale Achse quer zur Fahrtrichtung des Triebwagens (1) ermöglicht, wobei die hochgeschwenkte Stirnverkleidung horizontal in eine Endposition auf dem Wagendach verschiebbar ist.

4. Triebwagen nach einem der Ansprüche 1 bis 3, dadurch gekennzeichnet, daß die vor der Stirnwand befindliche Stirnverkleidung (4) mittels der randseitigen Abschirm- und Dichtungsmittel (20) gehalten wird.

5. Triebwagen zur wahlweisen Verwendung als Kopfwagen und als angekoppelter Durchgangswagen, mit einer Stirnwand, einem Führerstand (11,19) hinter der Stirnwand, einer zu öffnenden Vordertür in der Stirnwand und mit randseitigen Abschirm- und Dichtungsmitteln, die so angeordnet sind, daß sie zusammen mit gleichen Abschirm- und Dichtungsmitteln eines anderen Wagens einen abgeschirmten Durchgang zwischen den Wagen (6,7,12,13) bilden, wobei sich der Führerstand in einer Betriebsposition hinter der zumindest teilweise durchsichtigen Vordertür und in einer Ruheposition seitlich außerhalb des Durchganges bei geöffneter Vordertür befindet, dadurch gekennzeichnet, daß die Stirnwand aerodynamisch ausgebildet und bei Verwendung des Triebwagens als Durchgangswagen von einer Stirnverkleidung (8,14), bestehend aus einem Dachsegment (15) und zwei Seitenwandsegmenten (16) abgedeckt ist, wobei diese Stirnverkleidung (8,14) bei Verwendung des Triebwagens als Kopfwagen in einem Zwischendachraum (10,17) und Seitenwandräumen (9,18) eingefahren ist.

6. Triebwagen nach Anspruch 5, gekennzeichnet durch eine Stirnverkleidung (8) mit Dachsegment und hieran starr befestigten bzw. angeformten Seitenwandsegmenten.

7. Triebwagen nach Anspruch 5, gekennzeichnet durch eine Stirnverkleidung (14) mit Dachsegment (15) und hieran lösbar befestigbare Seitenwandsegmenten (16), wobei Dachsegment (15) und Seitenwandsegmente (16) in eingefahrener Position voneinander getrennt und in ausgefahrener Position miteinander verbunden sind.
